# EUROPEAN PATENT SPECIFICATION

(11) **EP 1 733 277 B1**
(45) Date of publication and mention of the grant of the patent: **03.10.2007**
(21) Application number: 05718552.2
(22) Date of filing: 24.03.2005
(51) Int. Cl.: G02F 1/01, D03D 15/00, D02G 3/44, G02F 1/1334

(54) **FIBRE WITH LATERAL ELECTRIC FIELDS**
FASER MIT SEITLICHEN ELEKTRISCHEN FELDERN
FIBRE A CHAMPS ELECTRIQUES LATERAUX

(30) Priority: 30.03.2004 GB 0407230
(43) Date of publication of application: 20.12.2006
(73) Proprietor: Koninklijke Philips Electronics N.V., 5621 BA Eindhoven (NL)
(72) Inventor: WILDERBEEK, Johannes T. A., Philips IP & Standards, Redhill Surrey RH1 5HA (GB); BURDINSKI, Dirk, c/o Philips IP & Standards, Redhill Surrey RH1 5HA (GB); DEN TOONDER, Jacob M. J., Philips IP & Standards, Redhill Surrey RH1 5HA (GB); KRANS, Jan M., c/o Philips IP & Standards, Redhill Surrey RH1 5HA (GB); VAN BRUGGEN, Michel P. B., Philips IP & Standards, Redhill Surrey RH1 5HA (GB)
(74) Representative: Damen, Daniel Martijn
(86) International application number: PCT/IB2005/051012
(87) International publication number: WO 2005/096075

(56) References cited:
- EP-A- 1 207 140
- EP-A- 1 482 352
- US-A- 5 906 004
- US-A- 6 096 666

## Description

This invention relates to a fibre or filament, especially one that is suitable for inclusion in a fabric or garment with the aim of producing optically detectable effects therein.

Various methods of producing colour changing, or light emitting fibres are known.

One known method uses perforated optical fibres which "leak" light through perforations when light is fed into one end of the fibre.

Other known methods are based on the use of an electroluminophor material, which emits light under the influence of an electric field. Such a method is described in UK patent application No. GB 2 273 606 and International patent application No. WO 97/15939. The electric field used in such methods is created by integrating at least two electrode layers in a fibre.

A problem with these existing methods is that it is necessary to apply a high voltage to the fibres in order to achieve a colour change or other optically detectable effect. A known fibre comprising polymer dispersed liquid crystal material is disclosed in US 6096666 which forms the basis of the preamble of claims 1 and 17.

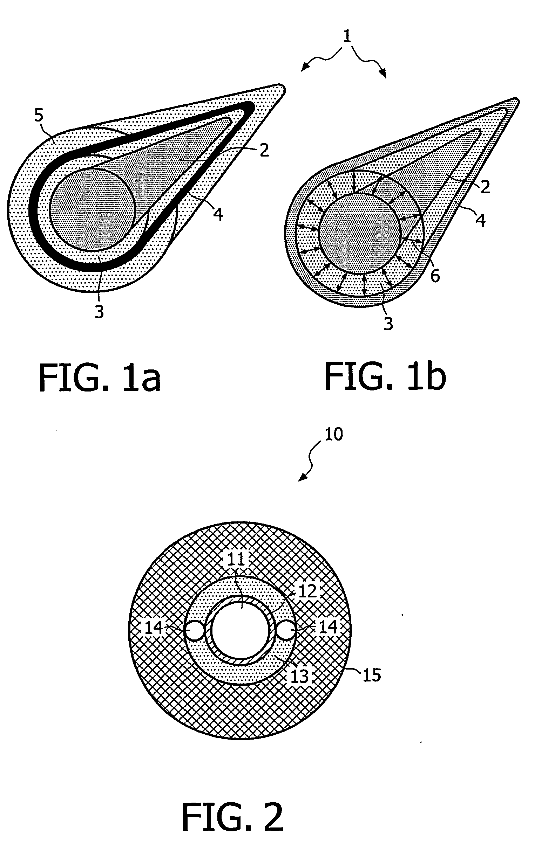

A further known arrangement of an existing fibre is shown in figure 1. The fibre 1 consists of a cylindrical conductive core 2, surrounded by successive outer layers 3 to 5. The core is typically made from metal wire e.g. copper wire, and functions as an inner electrode or heating element. The electro-optic substance 3 forms a layer around the core 2 and is sandwiched between the core 2 and an outer electrode layer 4. As shown in figure 1 a, the fibre may optionally include an outer sheath 5, which is at least partially transparent to light.

A problem with existing fibre arrangements is that the outer electrode layer 4 is typically formed by thin layer deposition processes, which can be complex and troublesome. Moreover, the success of the deposition process is largely dependent on the mechanical properties of the supporting electro-optic substance 3, thus limiting the number of possible substance combinations. For instance, the deposition of a outer electrode layer 4 covering a liquid or gel type electro-optic substance layer is extremely difficult to fabricate in practice.

The optical characteristics of the electro-optic substance are generally altered by an external stimulus, such as heat, current or an electric field. As a consequence of existing fibre electrode layering, electric fields 6 in the fibre have a radial topology i.e. the field lines pass between the electrode layers 2, 4 perpendicularly to the core 2 of the fibre 1. This is shown in figure 1 b, where the electric field lines 6 can be seen to be passing through the electro-optic substance layer 3 in radial directions relative to the core 2.

Another problem with known fibres is that a radial electric field topology within the fibres places a limitation on the number of electro-optic switching principles that are possible within the electro-optic substance. This in turn governs the changes in optical effects achievable within a particular fibre. Existing fibres must therefore use increasingly more sophisticated electrode layers in order to increase the number of possible switching principles.

The present invention relates particularly to the field of wearable electronics. This field aims at integrating specific functions such as sensing, actuating, light emitting, and colour changing into garments. It is particularly desirable to be able to integrate colour changing properties into textiles for the formation of garments, furnishings etc. Such technology could be used to make wearable displays, wearable indicators, and also to simply cause a change of colour or pattern to textiles for aesthetic reasons.

It is known to produce a wearable display by interweaving conductive fibres and fibres containing electro-optic substances. A problem with such displays is that the light emitting effect is not integrated into a single fibre. This means that the effect is not uniform across the garment or other work formed from the fibres. In addition it is necessary to use either two sets of interwoven fibres containing conductive elements, or additional conductive layers deposited on the woven structure.

It is an object of the present invention to provide a fibre or filament in which the optically changing function is integrated into the single fibre or filament, and wherein the change in fibre or filament appearance can be actively controlled.

It is another object of the present invention to provide a fibre or filament in which the change in fibre or filament appearance can be actively controlled by a single electrode layer.

It is further object of the present invention to provide a fibre or filament having a non-radial electric field topology in the fibre or filament.

It is a further object of the present invention to create a fabric from a fibre or filament according to the present invention which fabric may be used to form, for example, garments or furniture.

Some or all of these objects may be achieved by embodiments of the invention as described herein.

According to an aspect of the present invention there is provided a filament or fibre as defined in claim 1

According to a further aspect of the present invention there is provided a filament or fibre as defined in claim 17.

Other preferred and advantageous features will become apparent from dependent claims 2 to 16 and 18 to 36.

The invention also relates to a garment or textile formed from a plurality of fibres or filaments according to any one of the preceding claims.

Embodiments of the present invention will now be described by way of example and with reference to the accompanying drawings in which:
Figures 1a and 1b are perspective cross-sectional representations of fibres known in the prior art.
Figure 2 is a schematic cross-sectional representation of a first embodiment of a fibre according to the present invention.
Figures 3a and 3b are perspective cross-sectional representations of a fibre illustrating two different electrode layouts according to preferred embodiments of the present invention.
Figures 3c and 3d are perspective cross-sectional representations of fibres illustrating an electric field topology according to preferred embodiments of the present invention.
Figures 4a and 4b are schematic representations illustrating two different electrode layouts according to preferred embodiments of the present invention.
Figures 5a, 5b and 5c are schematic representations illustrating three different electrode layouts according to preferred embodiments of the present invention.
Figure 6 is a schematic representation of a further electrode layout according to a preferred embodiment of the present invention.
Figures 7a and 7b are schematic cross-sectional representations of a second and a third embodiment of a fibre according to the present invention.

Referring first to figure 2, a fibre according to the present invention is designated generally by the reference numeral 10. The fibre 10 comprises an elongate core 11, preferably formed from an electrically insulating material, the core having a core axis. In preferred embodiments, the core 11 is substantially cylindrical in shape and may be formed from a non-conductive flexible polymer fibre. Examples of suitable polymer fibres include, but are not limited to, polyesters, polyamides, polyacrylics, polypropylenes, vinyl-based polymers, wool, silk, flax, hemp, linen, jute, rayon-based fibres, cellulose acetate-based fibres and cotton.

In some preferred embodiments, the core 11 may be coated directly with a barrier layer (not shown) so as to protect the material of the core 11 during subsequent steps of the fibre manufacturing method. In particular, the barrier layer may be selected to be preferably resistant to chemical etchants. Hereinafter, references to 'core' are to be taken to include those coated with or without a barrier layer.

In a further embodiment the core 11 may be formed from a conductive material e.g. gold, silver or copper, which is then directly coated with an insulating layer.

An advantage of using polymer fibres is that they are readily available and have mechanical properties which can be adapted to suit the particular fibre requirement e.g. in terms of strength and flexibility. This is to be contrasted with conductive metal wires which have only a limited range of mechanical properties. Having a core material with a wider range of possible mechanical properties is advantageous, since it allows some electro-optic substances, and combinations thereof, not previously considered suitable to be used in the fibre 10.

The fibre 10 further comprises a stimulation means 12 and an electro-optic substance 13. The stimulation means 12 is adapted to exert an external stimuli on the substance 13 to induce an optically detectable effect. The stimulation means 12 is electrical in nature and is adapted to supply an electric field to the electro-optic substance 13. The electro-optic substance is selected so as to have at least one electrically modulatable optical characteristic.

In preferred embodiments, the stimulation means 12 comprises one or more elongate stimulation layers extending in a direction substantially parallel to the core axis, the stimulation layers being substantially coaxial with the core 11, and spaced at various radii from the core axis. Preferably, the stimulation means 12 further comprises one or more substance layers, each including the electro-optic substance 13. Each substance layer extends in a direction substantially parallel to the core axis, the substance layers being substantially coaxial with the core 11 and each associated with at least one stimulation layer.

In preferred embodiments, a stimulation layer and a substance layer surround at least a portion of the core 11. Most preferably, a stimulation layer is sandwiched between the core 11 and a substance layer 13.

In other preferred embodiments, the substance layer may be sandwiched between the core 11 and a stimulation layer 12 which is at least partially transparent to light.

It is to be appreciated that although the preferred embodiments are directed to a fibre 10 having a substantially cylindrical shape, this is not intended to be limiting, and the fibre 10 of the present invention may include other geometrical cross-sections and configurations. In particular, the fibre 10 of the present invention may also be in the form of a flat or ribbon-type fibre.

Hence, any references herein to "fibre", "filament", "layer" or "core" should not be taken to be limited to cylindrical geometries. Moreover, a "core" of a flat or ribbon-type fibre may be taken to include a base layer.

In preferred embodiments, the electro-optic substance 13 may consist primarily of conventional low molecular weight liquid crystal material, and combinations of low molecular weight liquid crystals and polymers. These polymers may consist of flexible polymers, side-chain liquid crystal polymers, main-chain liquid crystalline polymers, isotropic or anisotropic networks, dispersed polymer particles, and combinations thereof.

Alternatively, the electro-optic substance 13 may consist primarily of optionally coloured spherical or cylindrically shaped particles. The particles may optionally carry a charge and may be suspended in a carrier such as a liquid. Furthermore, each particle may comprise additional sub-particles, such as coloured polymer microcapsules, optionally suspended in a second carrier. In another example, coloured particles, e.g. colourants or pigments, may be used that are dispersed in an aqueous solution and that demonstrate a colour change upon reversible volume phase transitions in response to external stimuli (see for example, 'Polymer gel light-modulation materials imitating pigment cells', Akashi, R. et al., Adv. Mater., 14 (24), 2002, pg 1808).

In yet another alternative, the electro-optic substance 13 may be any known inorganic or organic electro-luminescent material or non-electro-luminescent carrier material containing electro-luminescent material. Non-limitative examples of such a material include phosphors and phosphor containing layers. In particular, examples of phosphors are large band gap semiconductors, such as II-VI compounds, rare earth oxides and oxysulfides, and insulators. Preferably, II-VI materials can be used, such as ZnS, SrS, doped with for instance, but not limited to, Mn, Cu, Eu, or Ce, and their respective derivatives. Another alternative is the use of organic (e.g. small molecule organic light emitting diode materials or oligomeric or polymeric organic light emitting diode materials) or inorganic light emitting diode materials.

In other preferred embodiments, the fibre 10 may further comprise an outer sheath 15 to protect the electro-optic substance 13 and to provide additional stability and support to the fibre 10. Preferably the outer sheath 15 is formed from a non-conductive material and is at least partially transparent to light. Conveniently, the outer sheath 15 is formed from a flexible polymer.

Referring again to figure 2, preferably the fibre 10 further comprises spacer means 14 for maintaining the fibre 10 in a predetermined shape. Depending on the nature of the electro-optic substance 13, it can be advantageous to include spacers 14 in the fibre or filament 10, particularly if the substance 13 has a liquid or gel-like form and therefore will not have a self maintaining shape.

The spacer means 14 are preferably formed from a non-conductive material, such as glass or polystyrene, and may be in the form of, for example, elongate wires, substantially circumferential wire rings or substantially spherical beads.

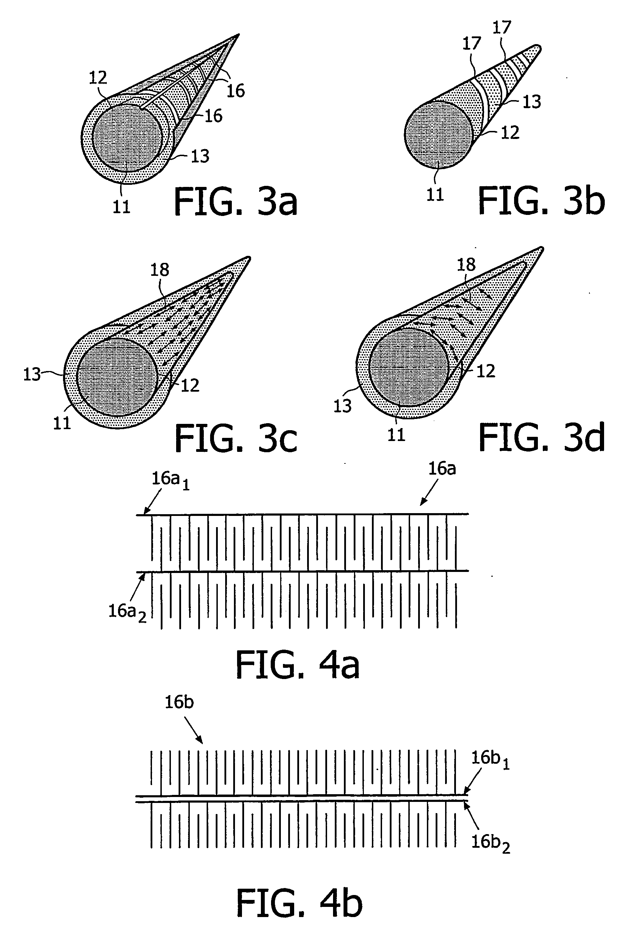

Turning to figures 3a and 3b, each stimulation layer preferably comprises an array of electrodes 16, 17 comprising a plurality of electrode pairs. The electrodes are preferably arranged so as to generate a lateral electric field 18 in either a direction substantially parallel to the axis of the core 11, or in a direction extending substantially circumferentially about the core axis, as shown in figures 3c and 3d respectively. In some arrangements, one or more electrode arrays may be arranged so as to generate electric fields which extend both substantially along the direction of the core axis and substantially circumferentially about the core axis. This is in contrast to the conventional radial, or perpendicular, electric fields used within existing fibres (cf. figure 1b). The lateral electric field 18 is substantially confined to the plane of the electrodes i.e. a surface field, which in the case of cylindrical geometries would be confined to a cylindrical surface. The local effective field strength depends on the applied voltage, the type and microstructure of substance 13 used in the fibre, and on the distance from the electrodes 16, 17. Typically, macroscopic field strengths are required in the range 0 - 50 V mm-1, but typically 0.5 - 5 V mm-1, for low molecular weight liquid crystal containing substance layers. The macroscopic field strength increases upon increasing content of higher molecular weight liquid crystals, such as liquid crystal polymers. In the case of electroluminescent materials the macroscopic field strength may be significantly higher, in the range 0 - 500 V mm-1, but typically 10 - 250 V mm-1.

References herein to "lateral electric field", "lateral field" or "surface field" are to be taken to include any electric field having directions substantially parallel to the axis of the fibre core 11 or having directions substantially circumferential about the core axis, irrespective of the magnitude of the field or any gradients in the field.

Further, in the case of flat or ribbon type fibre geometries (not shown), the plurality of electrode pairs in the electrode array is arranged so as to generate a lateral electric field either in a direction substantially parallel to the axis of the core 11, or in a direction substantially transverse to the core axis, wherein the electrode pairs are disposed in the same off-axis plane. The transverse field is therefore substantially constrained to the off-axis plane and has no radial field component passing through the core axis. Hence, references herein to "lateral electric field", "lateral field" or "surface field" are also to be taken to include transverse surface electric fields in flat or ribbon type fibre geometries.

Lateral fields 18 within the fibre 10 are advantageous, since they allow some electro-optic substances 13, and combinations thereof, hitherto previously considered unsuitable, to be used in the fibre 10. The electric field direction in the fibre 10 of the present invention enables electro-optic substances 13 in the fibre 10 to be electrically stimulated in a non-radial direction (relative to the core). This can be particularly advantageous for some liquid crystal materials and their switching principles and electroluminophors. In particular, liquid crystal switching principles that use a so-called in-plane switching principle benefit from this design, see for example 'Principles and characteristics of electro-optical behaviour with in-plane switching mode', Ohe, M. et al Proc. of the 15th International Display Research, Japan, 1995, pg 577) and 'Singe-substrate liquid-crystal displays by photo-enforced stratification', Penterman et al., Nature, 417, 2002, pg 55).

For an electrode array covered with a layer of electro-optic substance, the electric field will be constrained to the plane of the array, and the local effective field strength will depend on the applied voltage, the type and microstructure of substance 13 used in the fibre, and on the distance from the electrodes 16, 17. Generally, substantially the entire volume of substance can be switched, as has been successfully demonstrated in, for instance, in-plane switching liquid crystal displays, where liquid crystal layers with a layer thickness of 0-30 mm are switched (see for example 'Principles and characteristics of electro-optical behaviour with in-plane switching mode', Ohe, M. et al Proc. of the 15th International Display Research, Japan, 1995, pg 577, and '18.0-in.-Diagonal super-TFTs with fast response speed of 25 msec', Ohta, M. et al., Digest of Technical Papers, SID International Symposium, San Jose (USA), 1999, XXX, pg 86).

Moreover, the lateral fields 18 also allow previously unsuitable switching principles to be used with the electro-optic substance 13 of the fibre 10, thus leading to potentially new aesthetic and creative effects in the visual appearance of the fibre 10.

Further, in conventional switching principles, the exact definition of the electrode distance, or cell gap, is of particular importance as the cell gap sometimes needs to be tuned with an accuracy of 0.1 mm for an optimal modulation of the light. By using lateral electric fields 18 within the fibre 10, the electrodes 16, 17 need only be arranged in a single substantially thin layer (i.e. a stimulation layer) and so it is no longer necessary to have an inner (core) electrode and an outer electrode layer held in spaced relation in the fibre. This means an outer electrode layer is not required, and complex deposition layering is therefore avoided.

The stimulation means 12 enables the optical characteristics of the electro-optic substance 13 to be controlled via a single stimulation layer only, and allows the optically changing function to be fully integrated into the fibre 10, with more lenient specifications towards the distance between the electrodes than usually required for conventional switching principles.

Referring to figures 3a and 3b again, there is illustrated two preferred arrangements of electrode arrays 16, 17 for use in the fibre 10 of the present invention. In figure 3a the electrode array 16 has two sets (shown as black and white respectively) of conductive electrode fingers arranged in engaging alternate adjacent sequence. The array 16 is circumferentially and longitudinally arranged around the core 11 of the fibre 10. In an alternative arrangement in figure 3b, the two sets of electrode fingers are entwined (although electrically isolated from each other) and are arranged helically along the direction of the core axis.

In figures 4a and 4b there is illustrated two preferred arrangements of electrode arrays 16a, 16b. For clarity these are shown in 2-dimensions as a 'flat' schematic representation and it is to be appreciated that these could be wrapped around a cylindrical or other geometrical surface as required. In the preferred arrangement in figure 4a, the electrode fingers of the two sets of electrodes 16a1, 16a2 have a lateral dimension of typically 5-20 mm, are equally spaced, by typically 5-50 mm, and of equal length, typically almost equal to the fibre diameter, typically 20 mm to several mm, with the central 'spines' of the electrodes being spaced from each other by at least the length of the fingers. In the alternative arrangement in figure 4b, corresponding to the electrode array 16 as shown in figure 3a, the spines of the electrodes 16a1 and 16b1 are preferably arranged so as to be back-to-back. Principally, the minimal dimension of any electrode is only determined by the processing method, e.g. lithography, and in this way it is also feasible to produce electrodes with a lateral dimension of for instance 50nm, but in practice electrodes with dimensions as described above are preferred as the processing is substantially easier and more cost-effective.

It is to be understood that the example electrode arrangements 16a, 16b shown are not limiting and other suitable configurations which generate lateral electric fields may be used in the fibre of the present invention.

Preferably, the electrodes 16, 17 are of a form known as interdigitated electrodes, which are known to be used in some flat 2-dimensional liquid crystal displays for improving viewing angle (see for example, 'Principles and characteristics of electro-optical behaviour with in-plane switching mode', Ohe, M. et al Proc. of the 15th International Display Research, Japan, 1995, pg 577).

In preferred embodiments, the array of electrodes 16, 17 is in contact with the outer surface of the core 11, with the core 11 acting as a substrate for the array 16, 17. The electrodes may cover substantially all of the outer surface of the core 11, or just part of the surface, with the stimulation layer being typically 20-200 nm thick. Referring again to figures 3c and 3d, the lateral electric field 18 is substantially confined to the stimulation layer, which in the preferred embodiment would correspond to a surface field substantially covering the outer surface of the core 11. The surface field having essentially no perpendicular field components.

The electrodes may be fabricated in several ways, by using thin layer deposition techniques, lithographic methods, X-ray lithography, particle beams and other non-lithographic techniques.

Alternatively, a substance layer may act as a substrate for the array of electrodes 16, 17, in embodiments in which the substance 13 is sandwiched between the core 11 and a stimulation layer 12. In this embodiment the stimulation layer would need to be at least partially transparent to light.

The electrode material can be either inorganic or organic and includes, but is not limited to, indium tin oxide, gold, silver, copper, platinum, and their derivatives, and conductive or semi-conductive oligomers or polymers, e.g. polyaniline and thiophene derivatives such a poly(3,4-ethylenedioxythiophene): PEDT or PEDOT. Optionally, these oligomers or polymers may contain additives to optimise the electrical and thermal conductivity, and enhance the lifetime.

In preferred embodiments, the array of electrodes 16, 17 may optionally be covered by an overlying coating (not shown). The primary function of the coating is preferably to protect the electrodes, since these are by nature very fine and delicate. However, the coating may also perform a secondary function which includes, but is not limited to, a spacing layer, an adhesion layer, a barrier layer, a sealing or covering layer, a UV shielding layer, a polarising layer, a brightness enhancing or perception improvement layer, a colouration layer, a conductive or semi-conductive layer, a channelling layer, an additional electrode layer, a dielectric layer or any combinations thereof.

The lateral electric field 18 generated by the array of electrodes 16, 17 exerts an electrical influence on the portion of electro-optic substance 13 associated with the electrodes. The portion of the substance defines a switchable volume in the electro-optic substance 13 which corresponds to a switchable area on the outer surface of the substance 13. Hence, by selecting arrays 16, 17 of different sizes, part or all of the fibre 10 may be switched to produce detectable optical effects in the fibre appearance.

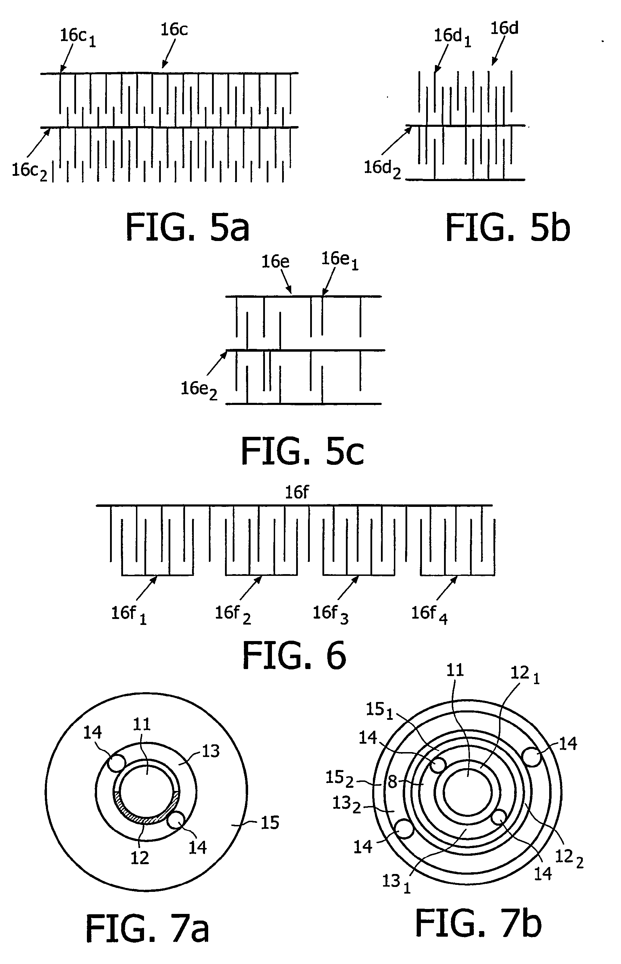

Patterned switching effects may be produced in the fibre 10 by the preferred arrangements of electrode arrays 16c, 16d and 16e as shown in figures 5a, 5b and 5c. In figure 5a, the electrode fingers are made to vary in length along the array 16c. Preferably, the variations in length may be randomly distributed, or else are cyclically repeated throughout the array 16c. By varying the lengths of the electrode fingers, it is possible to produce variations in the lateral electric field 18 within the array 16c, which produces variable switching effects in the portion of the substance in the vicinity of the electrodes.

More complex patterned switching effects may be achieved by varying the sequence of the electrode fingers, and the spacings therebetween. In figure 5b, there is shown a preferred arrangement in which one or more electrode fingers have been omitted from the interdigitated sequence of fingers. By omitting electrode fingers, discontinuities in the lateral electric field 18 are generated along the array 16d, which render the corresponding portions of the electro-optic substance 13 unswitchable at the locations of the discontinuities. Hence, by selecting which electrode fingers to omit during fabrication of the electrodes, variable optical effects may be produced in the visual appearance of the fibre 10.

If the spacings between adjacent electrode fingers are varied as shown in figure 5c, an intensity gradient switching effect may be produced along the array 16e. In this way, it is possible to produce greyscale and optical graduation effects in the electro-optic substance 13 either along a direction parallel to the core axis or circumferentially about the core axis, or both. Fibres 10 with the ability to exhibit intensity gradients are of considerable interest to the textile industry, especially to fashion designers seeking to incorporate electro-optic fibres into textile designs.

In a further preferred arrangement of electrodes, as shown in figure 6, the electrode fingers of a given set of electrodes are segmented into groups 16f1...16f4. An advantage of this arrangement is that the groups 16f1...16f4, can be individually addressed and switched, thereby allowing greater control over the patterned switching in the fibre 10. Individual addressing of electrode groups 16f1...16f4 provides further opportunities to produce interesting and aesthetically appealing optical effects. It should be noted, however, that although the example illustrates four groups 16f1...16f4 each of four electrode fingers, this is not limiting and it is to be understood that other arrangements of segmented electrodes are possible.

Referring to figure 7a, there is illustrated another preferred embodiment according to the present invention. In this example the electrical stimulation means 12 comprises a plurality of separate electrode arrays, each array covering a respective part of the outer surface of the core 11. The respective parts may be substantially equal in area, or else are variable in size. Preferably either some or substantially all of the outer surface of the core 11 may be covered by the plurality of electrode arrays.

Alternatively, the plurality of separate electrode arrays may reside on top of the electro-optic substance 13, with the substance 13 substantially surrounding the core 11 of the fibre 10.

The plurality of electrode arrays are electrically isolated from each other, and each is preferably able to switch a corresponding portion of the electro-optic substance 13. Preferably the plurality of electrode arrays may be switched independently, or else in conjunction with one or more others.

Preferably the plurality of electrode arrays are arrays of interdigitated electrodes.

In the embodiment shown in figure 7a, the fibre may further comprise an outer sheath 15 to protect the electro-optic substance 13 and to provide additional stability and support in the fibre 10. Preferably the outer sheath 15 is formed from a non-conductive material and is at least partially transparent to light. Conveniently, the outer sheath 15 is formed from a flexible polymer.

Referring again to figure 7a, the fibre may further comprise spacers in the form of spacer wires 14. The spacer wires 14 ensure the existence of a well-defined thickness to the layer of electro-optic substance 13. This may be necessary since the substance 13 has liquid or gel-like properties and therefore has no fixed shape. The spacer wires are preferably entwined around the core 11 (overlying the plurality of electrode arrays), and have a wire diameter of approximately 20-200µm. Alternatively, the spacer wires may be in the form of separate substantially circumferential wire rings disposed either randomly, or at predetermined intervals, along the length of the core. The spacer wires 14 should be non-conductive to prevent short-circuiting of the electrode arrays.

Alternatively, the spacers 14 are in the form of substantially spherical spacer beads positioned in the electro-optic substance 13. The diameter of each of the beads 14 is substantially equal to the desired thickness of the substance 13, which in this example is around 5-50µm. The spacing beads 14 should be non-conductive, to prevent short-circuiting of the electrode arrays. The beads may either be incorporated within the substance 13, or may be deposited directly onto the outer surface of the core 11 along with the plurality of electrode arrays.

Referring to figure 7b, there is illustrated a further preferred embodiment according to the present invention. In this example, the fibre 10 comprises two substance layers 131, 132 and two stimulation layers 121, 122 at different depths within the fibre 10. All of which overlie a non-conductive core 11.

Preferably one or more electrode arrays are in contact with the outer surface of the core 11, which arrays are then overlaid with a first electro-optic substance. The electrode arrays in contact with the core 11 preferably control the switching of the substance in the first substance layer 131. The fibre 10 further includes a central sheath 151 to provide structural support and stability in the fibre 10. The central sheath 151 is preferably formed from non-conductive material and is, at least partially, transparent to light. Conveniently, the central sheath 151 is formed from a flexible polymer.

The outer surface of the central sheath 151 preferably acts as a substrate for one or more further electrode arrays which are then overlaid with a second electro-optic substance. The electrode arrays in contact with the central sheath 151, preferably control the switching of the substance in the second substance layer 132. The fibre 10 further includes an outer sheath 152 to provide further structural support and stability in the fibre 10. The outer sheath is preferably formed from non-conductive material and is at least partially transparent to light. Conveniently, the outer sheath 152 is formed from a flexible polymer.

Preferably the first and second substance layers 131, 132 may include the same electro-optic substance or else include different electro-optic substances. However each is selected to have at least one electrically modulatable optical characteristic. The substances in the layers 131, 132 may be switched simultaneously or else be switched independently.

An advantage of having two or more substance layers 131, 132 at varying depths within the fibre 10, is that interesting and aesthetically appealing optical effects can be produced in the appearance of fibre 10, e.g. varying colour effects. In particular, switching one or more substances in layered configurations can give a 3-dimensional 'feel' to the fibre 10.

Alternatively, the central sheath 151 may be omitted, and the one or more further electrode arrays can be arranged on the outer surface of the first substance layer 131. In this arrangement, the substance in the first substance layer 131 may be switched either by the electrodes on its outer surface, or the electrodes on the core 11, or by both. The outer electrode arrays are preferably at least partially transparent to light.

It is important to appreciate in the embodiment shown in figure 7b, that the lateral electric fields 18 generated in the fibre 10 are substantially confined to their respective stimulation layers i.e. surface fields, and do not radially pass between the different layers of the fibre 10.

Referring again to figure 7b, the fibre 10 may further comprise spacers 14 in the form of spacer wires in the first and/or second substance layers 131, 132. The spacer wires are preferably entwined around the preceding layers to the substance layers 131, 132 and have a wire diameter of approximately 20-200µm. Alternatively, the spacer wires are in the form of separate substantially circumferential wire rings disposed either randomly, or at predetermined intervals, along the length of the preceding layers. The spacer wires should be non-conductive to prevent short-circuiting of the electrode arrays.

Alternatively, the spacers 14 may be in the form of substantially spherical spacer beads which are either incorporated within the electro-optic substances 131, 132 or deposited directly onto the outer surfaces of the layers preceding the respective electro-optic substances 131, 132. The diameter of each of the beads 14 is substantially equal to the desired thicknesses of the substance layers 131, 132, which in this example is in the range of 5-50µm. The spacing beads should be non-conductive to prevent short-circuiting of the electrode arrays.

It is to be understood that other fibre combinations are possible, such as a plurality of substance layers and a plurality of stimulation layers, arranged in various layered configurations within the fibre 10.

Other embodiments are intentionally within the scope of the accompanying claims.

## Claims

1. A filament or fibre (10) having a cylindrical shape and comprising:
an elongated core (11) having a core axis;
a substance (13) having at least one electrically modulatable optical characteristic, covering at least a portion of the core; and
an electrical stimulation means (12) adapted to produce an electric field arranged to electrically induce a change in the optical characteristic of the substance, thereby changing the visual appearance of the filament or fibre,
**characterised in that** the electrical stimulation means is arranged such that the electric field extends in a direction substantially parallel to the core axis or in a direction extending substantially circumferentially about the core axis,

2. The filament or fibre of claim 1, wherein the elongated core is formed from electrically insulating material.

3. The filament or fibre of claim 1 or claim 2, wherein the elongated core is substantially cylindrical.

4. The fibre or filament of any preceding claim, wherein the stimulation means comprises an elongated stimulation layer extending in a direction substantially parallel to the core axis, the stimulation layer being substantially coaxial with the core.

5. The fibre or filament of any preceding claim, comprising a plurality of elongated stimulation layers, each extending in a direction substantially parallel to the core axis, and each being substantially coaxial with the core, each layer being spaced apart from the core axis by a separation radius that is different from the separation radius of at least some of the other layers.

6. The fibre or filament of claim 4 or claim 5, wherein the stimulation means further comprises one or more substance layers each extending in a direction substantially parallel to the core axis, the substance layers being substantially coaxial with the core and each associated with at least one stimulation layer.

7. The filament or fibre of claim 6, wherein the substance layers extend substantially along the entire length of the core.

8. The filament or fibre of any of the claims 4 to 7, wherein each stimulation layer includes at least one electrode array.

9. The filament or fibre of any of claims 4 to 8, wherein each stimulation layer includes a plurality of electrode arrays.

10. The filament or fibre of claim 8 or claim 9, wherein each electrode array is adapted to produce an electric field substantially within a stimulation layer, the electric field extending along a direction substantially parallel to the core axis or in a direction extending substantially circumferentially about the core axis.

11. The filament or fibre of any of claims 8 to 10, wherein each electrode array is associated with at least a portion of the substance.

12. The filament or fibre of claim 11, wherein the electric field is adapted to electrically induce a change in the optical characteristic of the portion of the substance.

13. The filament or fibre of any of claims 8 to 12, wherein the core is in contact with a stimulation layer.

14. The filament or fibre of claim 13, wherein the stimulation layer is sandwiched between the core and at least one substance layer.

15. The filament or fibre of claim 13 or claim 14, wherein each electrode array extends circumferentially and axially along at least a portion of an outer surface of the core.

16. The filament or fibre of claim 15, wherein each electrode array is adapted to produce an electric field extending substantially along the portion of the outer surface of the core in a direction substantially parallel to the core axis or in a direction substantially circumferentially about the core axis.

17. A flat or ribbon type filament or fibre, comprising:
an elongated core having a core axis ;
a substance having at least one electrically modulatable optical characteristic, covering at least a portion of the core; and
an electrical stimulation means adapted to produce an electric field arranged to electrically induce a change in the optical characteristic of the substance, thereby changing the visual appearance of the filament or fibre, **characterised in that** the electrical stimulation means comprises a first and a second electrode pair disposed in the same off-axis plane and arranged such that the electric field extends in a direction substantially parallel to the core axis or in a direction extending substantially transversely to the core axis in the off-axis plane.

18. The filament or fibre of claim 17, wherein the electrical stimulation means further comprises a plurality of electrode pairs in the form of an electrode array, the electrode array disposed in the same off-axis plane.

19. The filament or fibre of claim 18, wherein the electrical stimulation means further comprises a plurality of co-planar electrode arrays.

20. The filament or fibre of any of claims 8 to 16 or claim 19, wherein each electrode array is electrically independent.

21. The filament or fibre of any of claims 8 to 16 or claim 19 or claim 20, wherein each electrode array includes segmented electrodes.

22. The filament or fibre of claim 21, wherein at least one electrode is adapted to be individually addressed.

23. The filament or fibre of any of claims 8 to 16 or claims 18 to 22, wherein the electrodes in an array have different predetermined spacings and/or different predetermined lengths, so as to produce variations in the electric field in the filament or fibre.

24. The filament or fibre of any of claims 8 to 16 or claims 18 to 23, wherein the electrodes are interdigitated electrodes.

25. The filament or fibre of any of the preceding claims, further comprising one or more sheaths substantially coaxial with the core.

26. The filament or fibre of claim 25, wherein the one or more sheaths are at least partially transparent.

27. The filament or fibre of claim 25 or claim 26, wherein the one or more sheaths are formed from a non-conductive flexible polymer.

28. The filament or fibre of any of the preceding claims, further comprising spacer means.

29. The filament or fibre of claim 28, wherein the spacer means comprises one or more spacer wires extending in a direction substantially parallel to the core axis.

30. The filament or fibre of claim 28, wherein the spacer means comprises a plurality of substantially spherical beads.

31. The filament or fibre of claim 30, wherein the substantially spherical beads are contained within the substance.

32. The filament or fibre of any of claims 28 to 31, wherein the spacer means are formed from electrically insulating material.

33. The filament or fibre of any preceding claim, wherein the electrically modulatable substance is an inorganic or organic electro-luminescent material or a liquid crystal material.

34. The filament or fibre of any preceding claim, wherein the core is made from a flexible polymer fibre.

35. The filament or fibre of claim 31, wherein the polymer fibre can be selected from any one of the following: polyester, polyamide, acrylic, polypropylene, vinyl-based polymers, wool, silk, flax, hemp, linen, jute, rayon, cellulose acetate and cotton.

36. The filament or fibre of any preceding claim, wherein the optical characteristic of the substance is the colour.

37. A garment formed from a plurality of filaments or fibres according to any one of the preceding claims.

38. A textile formed from a plurality of filaments or fibres according to any one of the preceding claims.

## Patentansprüche

1. Faden oder Faser (10), der bzw. die eine zylindrische Form aufweist und umfasst:
einen länglichen Kern (11), der eine Kernachse aufweist;
eine Substanz (13), die mindestens eine elektrisch modulierbare optische Eigenschaft aufweist und mindestens einen Abschnitt des Kerns bedeckt; und
ein elektrisches Stimulationsmittel (12), das in der Lage ist, ein elektrisches Feld zu erzeugen, das so beschaffen ist, dass es elektrisch eine Änderung in der optischen Eigenschaft der Substanz hervorruft, wodurch es das visuelle Erscheinungsbild des Fadens oder der Faser verändert, **dadurch gekennzeichnet, dass** das elektrische Stimulationsmittel so beschaffen ist, dass sich das elektrische Feld in einer Richtung erstreckt, die im Wesentlichen parallel zur Kernachse ist, oder in einer Richtung, die sich im Wesentlichen in Umfangsrichtung um die Kernachse erstreckt.

2. Faden oder Faser nach Anspruch 1, wobei der längliche Kern aus einem elektrisch isolierenden Material geformt ist.

3. Faden oder Faser nach Anspruch 1 oder Anspruch 2, wobei der längliche Kern im Wesentlichen zylindrisch ist.

4. Faden oder Faser nach einem der vorhergehenden Ansprüche, wobei das Stimulationsmittel eine langgestreckte Stimulationsschicht umfasst, die sich in einer im Wesentlichen zur Kernachse parallelen Richtung erstreckt, wobei die Stimulationsschicht im Wesentlichen koaxial zum Kern ist.

5. Faden oder Faser nach einem der vorhergehenden Ansprüche, der bzw. die mehrere langgestreckte Stimulationsschichten umfasst, wobei jede sich in einer im Wesentlichen zur Kernachse parallelen Richtung erstreckt und jede im Wesentlichen koaxial zum Kern ist, wobei jede Schicht von der Kernachse einen Abstand hat, der einem Trennradius entspricht, welcher von dem Trennradius mindestens einiger der anderen Schichten verschieden ist.

6. Faden oder Faser nach Anspruch 4 oder Anspruch 5, wobei das Stimulationsmittel ferner eine oder mehrere Substanzschichten umfasst, wobei jede sich in einer im Wesentlichen zur Kernachse parallelen Richtung erstreckt, wobei die Substanzschichten im Wesentlichen koaxial zum Kern sind und jede mit mindestens einer Stimulationsschicht gekoppelt ist.

7. Faden oder Faser nach Anspruch 6, wobei die Substanzschichten sich im Wesentlichen entlang der gesamten Länge des Kerns erstrecken.

8. Faden oder Faser nach einem der Ansprüche 4 bis 7, wobei jede Stimulationsschicht mindestens ein Elektrodenarray aufweist.

9. Faden oder Faser nach einem der Ansprüche 4 bis 8, wobei jede Stimulationsschicht mehrere Elektrodenarrays aufweist.

10. Faden oder Faser nach Anspruch 8 oder Anspruch 9, wobei jedes Elektrodenarray in der Lage ist, ein elektrisches Feld im Wesentlichen innerhalb einer Stimulationsschicht zu erzeugen, wobei sich das elektrische Feld entlang einer Richtung erstreckt, die im Wesentlichen parallel zur Kernachse ist, oder in einer Richtung, die sich im Wesentlichen in Umfangsrichtung um die Kernachse erstreckt.

11. Faden oder Faser nach einem der Ansprüche 8 bis 10, wobei jedes Elektrodenarray mit mindestens einem Abschnitt der Substanz verbunden ist.

12. Faden oder Faser nach Anspruch 11, wobei das elektrische Feld so beschaffen ist, dass es elektrisch eine Änderung in der optischen Eigenschaft des Abschnitts der Substanz hervorruft.

13. Faden oder Faser nach einem der Ansprüche 8 bis 12, wobei sich der Kern in Kontakt mit einer Stimulationsschicht befindet.

14. Faden oder Faser nach Anspruch 13, wobei die Stimulationsschicht zwischen dem Kern und mindestens einer Substanzschicht angeordnet ist.

15. Faden oder Faser nach Anspruch 13 oder 14, wobei sich jedes Elektrodenarray in Umfangsrichtung und axial entlang mindestens eines Abschnitts einer Außenfläche des Kerns erstreckt.

16. Faden oder Faser nach Anspruch 15, wobei jedes Elektrodenarray in der Lage ist, ein elektrisches Feld zu erzeugen, das sich im Wesentlichen entlang des Abschnitts der Außenfläche des Kerns in einer Richtung, die im Wesentlichen parallel zur Kernachse ist, oder in einer Richtung im Wesentlichen in Umfangsrichtung um die Kernachse erstreckt.

17. Flacher oder bandförmiger Faden oder flache oder bandförmige Faser, der bzw. die umfasst:
einen länglichen Kern, der eine Kernachse aufweist;
eine Substanz, die mindestens eine elektrisch modulierbare optische Eigenschaft aufweist und mindestens einen Abschnitt des Kerns bedeckt; und
ein elektrisches Stimulationsmittel, das in der Lage ist, ein elektrisches Feld zu erzeugen, das so beschaffen ist, dass es elektrisch eine Änderung in der optischen Eigenschaft der Substanz hervorruft, wodurch es das visuelle Erscheinungsbild des Fadens oder der Faser verändert, **dadurch gekennzeichnet, dass** das elektrische Stimulationsmittel ein erstes und ein zweites Elektrodenpaar umfasst, die in derselben nicht durch die Achse verlaufenden Ebene angeordnet sind und so beschaffen sind, dass sich das elektrische Feld in einer Richtung, die im Wesentlichen parallel zur Kernachse ist, oder in einer Richtung, die sich im Wesentlichen quer zur Kernachse erstreckt, in der nicht durch die Achse verlaufenden Ebene erstreckt.

18. Faden oder Faser nach Anspruch 17, wobei das elektrische Stimulationsmittel ferner mehrere Elektrodenpaare in der Form eines Elektrodenarrays umfasst, wobei das Elektrodenarray in derselben nicht durch die Achse verlaufenden Ebene angeordnet ist.

19. Faden oder Faser nach Anspruch 18, wobei das elektrische Stimulationsmittel ferner mehrere koplanare Elektrodenarrays umfasst.

20. Faden oder Faser nach einem der Ansprüche 8 bis 16 oder Anspruch 19, wobei jedes Elektrodenarray elektrisch unabhängig ist.

21. Faden oder Faser nach einem der Ansprüche 8 bis 16 oder Anspruch 19 oder Anspruch 20, wobei jedes Elektrodenarray segmentierte Elektroden aufweist.

22. Faden oder Faser nach Anspruch 21, wobei mindestens eine Elektrode so beschaffen ist, dass sie einzeln adressiert werden kann.

23. Faden oder Faser nach einem der Ansprüche 8 bis 16 oder der Ansprüche 18 bis 22, wobei die Elektroden in einem Array unterschiedliche vorgegebene Abstände und/oder unterschiedliche vorgegebene Längen aufweisen, so dass sie Änderungen in dem elektrischen Feld in dem Faden oder der Faser hervorrufen.

24. Faden oder Faser nach einem der Ansprüche 8 bis 16 oder der Ansprüche 18 bis 23, wobei die Elektroden kammartig verzahnte Elektroden sind.

25. Faden oder Faser nach einem der vorhergehenden Ansprüche, der bzw. die ferner eine oder mehrere Ummantelungen umfasst, die im Wesentlichen koaxial zum Kern sind.

26. Faden oder Faser nach Anspruch 25, wobei die eine oder die mehreren Ummantelungen mindestens teilweise durchsichtig ist bzw. sind.

27. Faden oder Faser nach Anspruch 25 oder Anspruch 26, wobei die eine oder die mehreren Ummantelungen aus einem nichtleitenden flexiblen Polymer hergestellt sind.

28. Faden oder Faser nach einem der vorhergehenden Ansprüche, der bzw. die ferner Distanzmittel umfasst.

29. Faden oder Faser nach Anspruch 28, wobei das Distanzmittel einen oder mehrere Distanzdrähte umfasst, die sich in einer im Wesentlichen zur Kernachse parallelen Richtung erstrecken.

30. Faden oder Faser nach Anspruch 28, wobei das Distanzmittel mehrere im Wesentlichen kugelförmige Perlen umfasst.

31. Faden oder Faser nach Anspruch 30, wobei die im Wesentlichen kugelförmigen Perlen in der Substanz enthalten sind.

32. Faden oder Faser nach einem der Ansprüche 28 bis 31, wobei die Distanzmittel aus elektrisch isolierendem Material hergestellt sind.

33. Faden oder Faser nach einem der vorhergehenden Ansprüche, wobei die elektrisch modulierbare Substanz ein anorganisches oder organisches elektrolumineszentes Material oder ein Flüssigkristallmaterial ist.

34. Faden oder Faser nach einem der vorhergehenden Ansprüche, wobei der Kern aus einer flexiblen Polymerfaser hergestellt ist.

35. Faden oder Faser nach Anspruch 31, wobei die Polymerfaser als irgendeine von folgenden gewählt sein kann: Polyester, Polyamid, Acryl, Polypropylen, Polymere auf Vinylbasis, Wolle, Seide, Flachs, Hanf, Leinen, Jute, Kunstseide, Celluloseacetat und Baumwolle.

36. Faden oder Faser nach einem der vorhergehenden Ansprüche, wobei die optische Eigenschaft der Substanz die Farbe ist.

37. Kleidungsstück, das aus einer Vielzahl von Fäden oder Fasern gemäß einem der vorhergehenden Ansprüche hergestellt ist.

38. Textil, das aus einer Vielzahl von Fäden oder Fasern gemäß einem der vorhergehenden Ansprüche hergestellt ist.

## Revendications

1. Filament ou fibre (10) ayant une forme cylindrique et comprenant:
un noyau allongé (11) qui a un axe de noyau;
une substance (13) qui a au moins une caractéristique optique modulable électriquement, couvrant au moins une partie du noyau; et
un moyen de stimulation électrique (12) à même de produire un champ électrique, disposé pour induire électriquement une modification de la caractéristique optique de la substance, modifiant par là l'apparence visuelle de la fibre ou filament, **caractérisé en ce que** le moyen de stimulation électrique est disposé de façon que le champ électrique s'étende dans une direction essentiellement parallèle à l'axe du noyau ou dans une direction qui s'étend essentiellement circonférentiellement autour de l'axe du noyau.

2. Filament ou fibre selon la revendication 1, où le noyau allongé est formé d'un matériau électriquement isolant.

3. Filament ou fibre selon la revendication 1 ou la revendication 2 , où le noyau allongé est essentiellement cylindrique.

4. Fibre ou filament selon l'une quelconque des revendications précédentes, où le moyen de stimulation comprend une couche de stimulation allongée qui s'étend dans une direction essentiellement parallèle à l'axe du noyau, la couche de stimulation étant essentiellement coaxiale avec le noyau.

5. Fibre ou filament selon l'une quelconque des revendications précédentes, qui comprend une pluralité de couches de stimulation allongées, chacune s'étendant dans une direction essentiellement parallèle à l'axe du noyau et chacune étant essentiellement coaxiale avec le noyau, chaque couche étant distante de l'axe du noyau d'un rayon de séparation qui est différent du rayon de séparation d'au moins certaines des autres couches.

6. Fibre ou filament selon la revendication 4 ou la revendication 5, où le moyen de stimulation comprend en outre une ou plusieurs couches de substance qui s'étendent chacune dans une direction essentiellement parallèle à l'axe du noyau, les couches de substance étant essentiellement coaxiales avec le noyau et chacune associée à au moins une couche de stimulation.

7. Filament ou fibre selon la revendication 6, où les couches de substance s'étendent essentiellement le long de la longueur entière du noyau.

8. Filament ou fibre selon l'une quelconque des revendications 4 à 7, où chaque couche de stimulation comprend au moins une matrice d'électrodes.

9. Filament ou fibre selon l'une quelconque des revendications 4 à 8, où chaque couche de stimulation comprend une pluralité de matrices d'électrodes.

10. Filament ou fibre selon la revendication 8 ou la revendication 9, où chaque matrice d'électrodes est à même de produire un champ électrique essentiellement dans une couche de stimulation, le champ électrique s'étendant le long d'une direction essentiellement parallèle à l'axe du noyau ou dans une direction qui s'étend essentiellement circonférentiellement autour de l'axe du noyau.

11. Filament ou fibre selon l'une quelconque des revendications 8 à 10, où chaque matrice d'électrodes est associée à au moins une partie de la substance.

12. Filament ou fibre selon la revendication 11, où le champ électrique est à même d'induire électriquement une modification de la caractéristique optique de la partie de la substance.

13. Filament ou fibre selon l'une quelconque des revendications 8 à 12, où le noyau est en contact avec une couche de stimulation.

14. Filament ou fibre selon la revendication 13, où la couche de stimulation est prise en sandwich entre le noyau et au moins une couche de substance.

15. Filament ou fibre selon la revendication 13 ou la revendication 14, où chaque matrice d'électrodes s'étend circonférentiellement et axialement le long d'au moins une partie d'une surface extérieure du noyau.

16. Filament ou fibre selon la revendication 15, où chaque matrice d'électrodes est à même de produire un champ électrique qui s'étend essentiellement le long de la partie de la surface extérieure du noyau dans une direction essentiellement parallèle à l'axe du noyau ou dans une direction essentiellement circonférentielle autour de l'axe du noyau.

17. Filament ou fibre plat(e) ou de type ruban, comprenant :
un noyau allongé qui a un axe de noyau;
une substance qui a au moins une caractéristique optique modulable électriquement, couvrant au moins une partie du noyau; et
un moyen de stimulation électrique à même de produire un champ électrique, disposé pour induire électriquement une modification de la caractéristique optique de la substance, modifiant par là l'apparence visuelle du filament ou de la fibre, **caractérisé en ce que** le moyen de stimulation électrique comprend une première et une deuxième paire d'électrodes disposées dans le même plan en dehors de l'axe, et disposé de façon que le champ électrique s'étende dans une direction essentiellement parallèle à l'axe du noyau ou dans une direction qui s'étend essentiellement transversalement par rapport à l'axe du noyau dans le plan en-dehors de l'axe.

18. Filament ou fibre selon la revendication 17, où le moyen de stimulation électrique comprend en outre une pluralité de paires d'électrodes sous forme d'une matrice d'électrodes, la matrice d'électrodes étant disposée dans le même plan en dehors de l'axe.

19. Filament ou fibre selon la revendication 18, où le moyen de stimulation électrique comprend en outre une pluralité de matrices d'électrodes coplanaires.

20. Filament ou fibre selon l'une quelconque des revendications 8 à 16 ou la revendication 19, où chaque matrice d'électrodes est électriquement indépendante.

21. Filament ou fibre selon l'une quelconque des revendications 8 à 16 ou la revendication 19 ou la revendication 20, où chaque matrice d'électrodes comprend des électrodes segmentées.

22. Filament ou fibre selon la revendication 21, où au moins une électrode est à même d'être adressée individuellement.

23. Filament ou fibre selon l'une quelconque des revendications 8 à 16 ou des revendications 18 à 22, où les électrodes dans une matrice ont différents espacements prédéterminés et / ou différentes longueurs prédéterminées, de façon à produire des variations du champ électrique dans le filament ou la fibre.

24. Filament ou fibre selon l'une quelconque des revendications 8 à 16 ou des revendications 18 à 23, où les électrodes sont des électrodes interdigitées.

25. Filament ou fibre selon l'une quelconque des revendications précédentes, comprenant en outre une ou plusieurs enveloppes essentiellement coaxiales avec le noyau.

26. Filament ou fibre selon la revendication 25, où ladite une ou plusieurs enveloppes est/sont au moins partiellement transparente.

27. Filament ou fibre selon la revendication 25 ou la revendication 26, où ladite une ou plusieurs enveloppes est/sont formée(s) d'un polymère flexible non conducteur.

28. Filament ou fibre selon l'une quelconque des revendications précédentes, comprenant en outre un moyen d'espacement.

29. Filament ou fibre selon la revendication 28, où le moyen d'espacement comprend un ou plusieurs fils d'espacement qui s'étendent dans une direction essentiellement parallèle à l'axe du noyau.

30. Filament ou fibre selon la revendication 28, où le moyen d'espacement comprend une pluralité de billes essentiellement sphériques.

31. Filament ou fibre selon la revendication 30, où les billes essentiellement sphériques sont contenues dans la substance.

32. Filament ou fibre selon l'une quelconque des revendications 28 à 31, où le moyen d'espacement est formé d'un matériau électriquement isolant.

33. Filament ou fibre selon l'une quelconque des revendications précédentes, où la substance électriquement modulable est un matériau électroluminescent organique ou inorganique ou un matériau cristal liquide.

34. Filament ou fibre selon l'une quelconque des revendications précédentes, où le noyau est fait à partir d'une fibre polymère flexible.

35. Procédé selon la revendication 31, où la fibre polymère flexible peut être sélectionnée parmi l'une quelconque des matières suivantes : polyester, polyamide, acrylique, polypropylène, polymères à base de vinyle, laine, soie, lin, chanvre, jute, rayonne, acétate de cellulose et coton.

36. Filament ou fibre selon l'une quelconque des revendications précédentes, où la caractéristique optique de la substance est la couleur.

37. Vêtement formé d'une pluralité de filaments ou fibres selon l'une quelconque des revendications précédentes.

38. Textile formé d'une pluralité de filaments ou fibres selon l'une quelconque des revendications précédentes.
